# EUROPÄISCHE PATENTANMELDUNG

(11) **EP 1 223 072 A2**
(43) Veröffentlichungstag der Anmeldung: **17.07.2002**
(21) Anmeldenummer: 02000957.7
(22) Anmeldetag: 16.01.2002
(51) Int. Cl.: B60N 2/01

(54) **Sitzanordnung, insbesondere für Wohnmobile**

(30) Priorität: 16.01.2001 DE 10101882
(71) Anmelder: AGUTI PRODUKTENTWICKLUNG & DESIGN GMBH, 88079 Kressbronn (DE)
(72) Erfinder: Grieger, Andreas, 88079 Kressbronn (DE)
(74) Vertreter: Fiener, Josef

(57) **Zusammenfassung**

Zur verbesserten Platzausnutzung einer Sitzanordnung (1), insbesondere für Wohnmobile, mit wenigstens einem, in Fahrtrichtung weisenden Sitz, insbesondere Fahrer- und Beifahrersitz (2), und wenigstens einem entgegen der Fahrtrichtung weisenden Nebensitz (3) mit einem Untergestell (4), insbesondere in Form einer Sitzbank, wird vorgeschlagen, daß der Nebensitz (3) relativ zu seinem Untergestell um 180° in eine ebenfalls in Fahrtrichtung (F) weisende Stellung bewegbar ist.

## Beschreibung

Die Erfindung betrifft eine Sitzanordnung, insbesondere für Wohnmobile, mit wenigstens einem, in Fahrtrichtung weisenden Sitz, insbesondere Fahrer- und Beifahrersitz, und wenigstens einem entgegen der Fahrtrichtung weisenden Nebensitz mit einem Untergestell, insbesondere in Form einer Sitzbank.

Derartige Sitzanordnungen werden insbesondere in Wohnmobilen eingesetzt, wobei neben dem Fahrersitz als Hauptsitz und im allgemeinen dem Beifahrersitz wenigstens ein Nebensitz vorgesehen ist, der entgegen der Fahrtrichtung, also zum Fahrzeugheck hin, zeigt. Dieser Nebensitz ist mit seiner Sitzlehne etwa Rücken an Rücken zum Fahrersitz angeordnet, um beispielsweise beim Stand des Fahrzeuges an einem Tisch platznehmen zu können. Häufig ist dabei der Nebensitz in Form einer Sitzbank mit zwei derartigen Nebensitzen ausgebildet, damit mehrere Personen an dem Tisch platznehmen können. Während der Fahrt sind diese Nebensitze jedoch im allgemeinen nur mit Nachteilen zu verwenden, da die mitfahrenden Personen entgegen die Fahrtrichtung schauen würden. Diese Sitzhaltung wird von vielen mitfahrenden Personen nicht akzeptiert, da sie über das Fahrtgeschehen nicht informiert sind. Dies gilt insbesondere für mitfahrende Kinder, die Kontakt zu ihren auf dem Fahrer- und Beifahrersitz platzgenommenen Eltern halten möchten.

Demzufolge liegt der Erfindung die Aufgabe zugrunde, eine Sitzanordnung zu schaffen, mit der die vorstehend genannten Nachteile vermieden werden können und insbesondere eine universellere Platzausnutzung ermöglicht wird.

Diese Aufgabe wird gelöst durch eine Sitzanordnung mit den Merkmalen des Patentanspruches 1. Bevorzugte Ausführungen sind Gegenstand der abhängigen Ansprüche.

Durch die Bewegung des Nebensitzes relativ zu seinem Untergestell um 180° in eine ebenfalls in Fahrtrichtung weisende Stellung wird erreicht, daß die auf dem Nebensitz platznehmende Person mit den Personen auf dem Fahrer- und/oder Beifahrersitz Kontakt halten kann. Zudem wird dadurch der Blick in Fahrtrichtung ermöglicht, so daß auch die auf dem Nebensitz platzgenommene Person das Verkehrsgeschehen beobachten kann. In bevorzugter Ausführungsform ist dabei der Nebensitz in seiner ausgeschobenen und gedrehten Stellung im wesentlichen zwischen dem Fahrer- und Beifahrersitz angeordnet, so daß reichlich Beinfreiheit besteht. Die erforderliche Sicherheit wird dabei durch einen in den Nebensitz integrierten Dreipunkt-Sicherheitsgurt gewährleistet.

Die vorstehend beschriebene, ausgeschobene und gedrehte Stellung wird bevorzugt mittels einer Schiebe-, insbesondere Teleskopführung und einem Drehsockel erzielt. Da der Nebensitz in dieser Stellung um etwa seine Sitzbreite quer zur Fahrtrichtung verschoben ist, kann an dessen Ausgangsposition wenigstens ein Sitzpolster auf dem Untergestell eingelegt werden, so daß wiederum eine durchgehende Sitzfläche entsteht. Somit kann diese Sitzanordnung auch einen zusätzlichen Sitzplatz schaffen, beispielsweise auch in der entgegen der Fahrtrichtung weisenden Stellung, damit eine weitere Person an dem Tisch des Wohnmobiles platznehmen kann.

Nachfolgend wird ein Ausführungsbeispiel der Sitzanordnung anhand der Zeichungen näher erläutert und beschrieben. Hierbei zeigen:
- Fig. 1: eine Sitzanordnung in der Ausgangsstellung;
- Fig. 2: eine Sitzanordnung gemäß Fig. 1 in einer teilweise ausgeschobenen Stellung eines Nebensitzes; und
- Fig. 3: eine Sitzanordnung gemäß Fig. 1 und 2 mit gedrehtem Nebensitz.

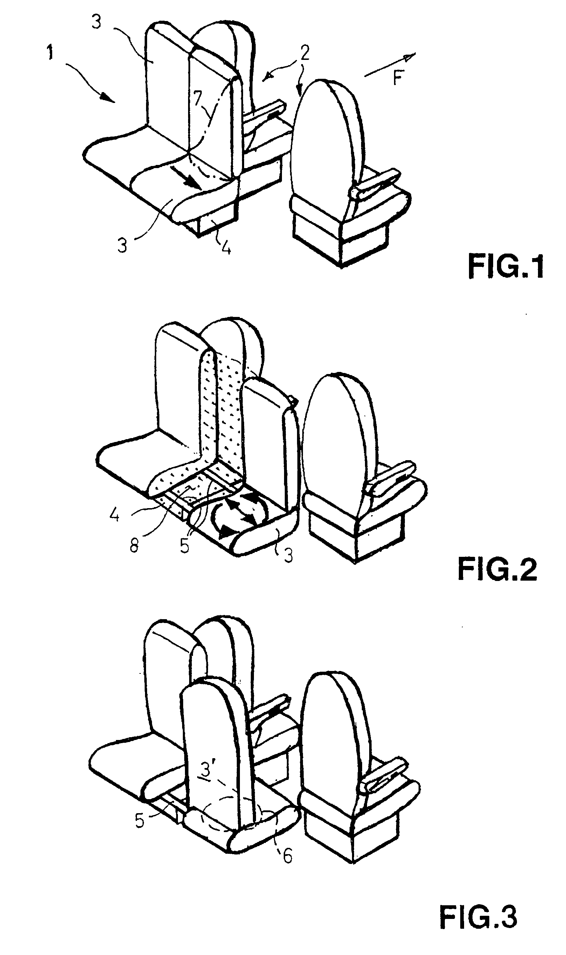

In Fig. 1 ist eine Sitzanordnung 1 für ein Wohnmobil dargestellt. Die Sitzanordnung umfaßt hierbei einen Fahrerund Beifahrersitz 2, die voneinander beabstandet sind und jeweils in Fahrtrichtung F weisen. An der Rückseite des Fahrersitzes 2 ist eine Sitzbank auf einem Untergestell 4 angeordnet. Hierdurch wird wenigstens ein Nebensitz 3 gebildet, wobei hier zwei Personen platznehmen können. Der zur Fahrzeugmitte hin angeordnete Nebensitz 3 ist dabei an einer auf dem Untergestell 4 angeordneten Schiebe-, insbesondere Teleskopführung 5 quer zur Fahrtrichtung F um etwa seine Sitzbreite verschiebbar, wie dies in Fig. 2 dargestellt ist.

Anschließend ist der Nebensitz 3 an einem unter dem Nebensitz 3 angeordneten Drehsockel 6 um 180° drehbar ausgebildet, der an der Schiebeführung 5 befestigt ist, wie dies in Fig. 3 dargestellt ist. Hierdurch nimmt der Drehsitz 3 dann eine in Fahrtrichtung F weisende Stellung 3' ein. In dieser Stellung 3' blickt somit eine darauf platzgenommene Person ebenfalls in Fahrtrichtung F wie die Personen auf dem Fahrer- und Beifahrersitz 2. Durch den Abstand zwischen Fahrersitz und Beifahrersitz 2 genießt diese Person auf dem Nebensitz 3 in der Stellung 3' eine großzügige Beinfreiheit.

Die erforderliche Unfallsicherheit wird dabei durch einen in den Nebensitz 3 integrierten Sicherheitsgurt 7 (vgl. auch Fig. 1) gewährleistet, da die nicht näher dargestellten Gurthalterungen ebenfalls bei der Verschiebe- und Verdrehbewegung mitbewegt werden, so daß über den Drehsockel 6 und die Schiebe-, insbesondere Teleskopführung 5 bei einem Unfall die auftretenden Kräfte in das stabile Untergestell 4 eingeleitet werden.

In Fig. 2 ist bei ausgeschobenem Nebensitz 3 an dessen Ausgangsposition (vgl. Fig. 1) wenigstens ein punktiert dargestelltes Sitzpolster 8 eingelegt. Hierdurch wird für diese Sitzbank der Nebensitze 3 ein weiterer Sitzplatz geschaffen, so daß bei stehendem Wohnmobil eine weitere Person an einem nicht dargestellten Tisch platznehmen kann. Diese Sitzbank-Anordnung gemäß Fig. 3 kann zudem noch erweitert werden, wenn der Beifahrersitz ebenfalls um 180° drehbar ist, so daß eine durchgehende Sitzbank mit einem feststehenden Nebensitz, dem Sitzpolster 8, dem ausgezogenen Nebensitz 3 und dem um 180° gedrehten Beifahrersitz 2 geschaffen würde.

Es sei darauf hingewiesen, daß anstatt der bewegbaren Lagerung mit einer Schiebe- bzw. Teleskopführung 5 und einem Drehsockel 6 auch eine Lösung möglich ist, die nur auf eine einzige, ggf. exzentrische Drehführung um eine Hochachse beruht.

## Patentansprüche

1. Sitzanordnung (1), insbesondere für Wohnmobile, mit wenigstens einem, in Fahrtrichtung weisenden Sitz, insbesondere Fahrer- und Beifahrersitz (2), und wenigstens einem entgegen der Fahrtrichtung weisenden Nebensitz (3) mit einem Untergestell (4), insbesondere in Form einer Sitzbank,
**dadurch gekennzeichnet, daß**
der Nebensitz (3) relativ zu seinem Untergestell (4) um 180° in eine ebenfalls in Fahrtrichtung (F) weisende Stellung (3') bewegbar ist.

2. Sitzanordnung nach Anspruch 1, **dadurch gekennzeichnet, daß**
der Nebensitz (3) um etwa seine Sitzbreite quer zur Fahrtrichtung (F) verschiebar und anschließend um 180° drehbar ausgebildet ist.

3. Sitzanorndung nach Anspruch 1 oder 2, **dadurch gekennzeichnet, daß**
der Nebensitz (3) in der Stellung (3') im wesentlichen zwischen Fahrer- und Beifahrersitz (2) ausgerichtet ist.

4. Sitzanordnung nach einem der Ansprüche 1-3, **dadurch gekennzeichnet, daß**
der Nebensitz (3) an seiner Unterseite einen Drehsockel (6) aufweist.

5. Sitzanordnung nach einem der Ansprüche 1-4, **dadurch gekennzeichnet, daß**
der Nebensitz (3) auf seinem Untergestell (4) eine quer zur Fahrtrichtung (F) ausgerichtete Schiebe-, insbesondere Teleskopführung (5) aufweist.

6. Sitzanordnung nach einem der Ansprüche 1-5, **dadurch gekennzeichnet, daß**
der Nebensitz (3) einen integrierten Sicherheitsgurt (7) aufweist.

7. Sitzanordnung nach Anspruch 6, **dadurch gekennzeichnet, daß**
der Sicherheitsgurt (7) als Dreipunkt-Sicherheitsgurt ausgebildet ist.

8. Sitzanordnung nach einem der Ansprüche 1-7, **dadurch gekennzeichnet, daß**
bei ausgeschobenem Nebensitz (3) an dessen Ausgangsposition wenigstens ein Sitzpolster (8) einlegbar ist.
